(19) **Europäisches Patentamt**
**European Patent Office**
**Office européen des brevets**

(11) **EP 1 873 637 A1**

(12) **EUROPEAN PATENT APPLICATION**

(43) Date of publication:
**02.01.2008 Bulletin 2008/01**

(51) Int Cl.:
***G06F 9/445*** <sup>(2006.01)</sup>

(21) Application number: **06253467.2**

(22) Date of filing: **30.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **British Telecommunications Public Limited Company London EC1A 7AJ (GB)**

(72) Inventor: **The designation of the inventor has not yet been filed**

(54) **Configuration management**

(57)    A configuration file for configuring a software component for a second destination different from a default destination, in which the software component comprises code requiring a set of parameters to configure the code for each destination,. The configuration file is prepared by generating a default set of parameters relating to the default destination and in which a subset of the default parameters relate to both the default and the second destinations; generating a second set of parameters relating to the second destination but not to the default destination; combining the parameters of the default set with those of the second set to produce the configuration file by replacing in the default set each parameter that does not relate to the second destination with a corresponding parameter from the second set.

| A1 | A2 | A3 | A4 | A5 | A6 | A7 | A8 | A9 | A 10 | A 11 | A 12 | A 13 | A 14 | A 15 | A 16 | A 17 | A 18 |
|----|----|----|----|----|----|----|----|----|------|------|------|------|------|------|------|------|------|

Fig. 6A

EP 1 873 637 A1

| B1 | | B3 | B4 | | | B7 | B8 | B9 | | B 11 | | B 13 | B 14 | | | B 17 | B 18 |
|----|----|----|----|----|----|----|----|----|----|------|----|------|------|----|----|------|------|
| | C2 | C3 | C4 | | C6 | C7 | | | C 10 | C 11 | | C 13 | | C 15 | | C 17 | |

Fig. 6B

| B1 | | B3 | B4 | | | B7 | B8 | B9 | | B 11 | | B 13 | B 14 | | | B 17 | B 18 |
|----|----|----|----|----|----|----|----|----|----|------|----|------|------|----|----|------|------|

| | C2 | C3 | C4 | | C6 | C7 | | | C 10 | C 11 | | C 13 | | C 15 | | C 17 | |

Fig. 6C

**Description**

The present invention relates to the field of software configuration management and, in particular, to the management of the configuration of software elements for different operating environments and applications.

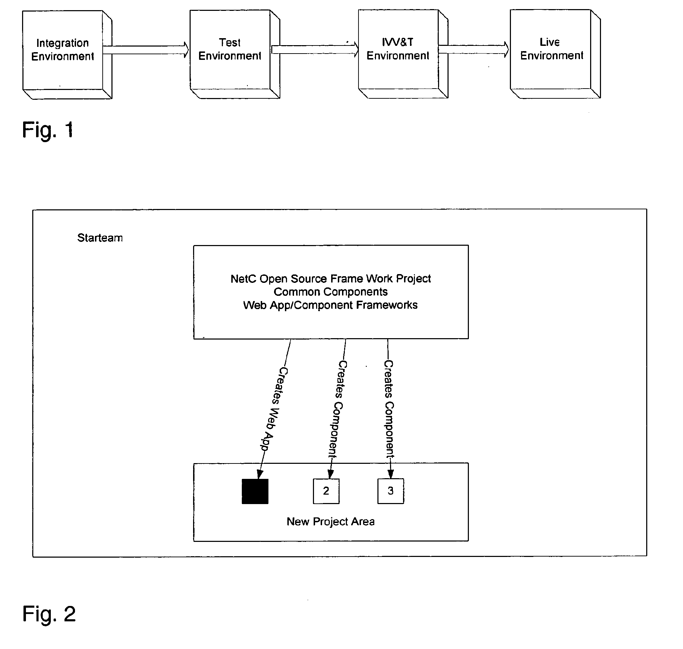

As illustrated in Figure 1, in the course of software development, code may be run in a number of different environments, i.e. on different computer systems. These may include a development environment comprising of a number of separate workstations, each under the control of a different developer; an integration environment comprising a single server; an integration, validation, verification and test (IVVT) environment comprising a further server with emulation software to emulate the working environment that the software is destined to operate in; and finally the working environment: the live platform comprising one or more computers in the working system. Alternatively, the development stage may consist of two phases with initial development taking place on a local computer and final development taking place on a deployment server. Code written and configured to operate in the development environment will not run if transferred as-is to the integration environment, IVVT environment or live platform as the resources used by the code and the sub-systems with which the code interacts will tend to have different characteristics and be allocated different locations or addresses in each environment. In addition, code may need to be customised for a particular application, such as displaying text in a different language for use in different countries.

To allow for these disparate environments, software is often developed in the form of operating code (comprising a number of software elements) and a separate configuration file (also known as a properties file). It is the parameters in the configuration file that specify the software component for each environment or application. Common parameters relate to email address, database information, and third party application software configuration parameters. Each parameter may comprise multiple fields, typically one for location, one for user name and one for password, for example. When moving from a development environment to deployment in, for example, a test, reference or live environment, the properties need to be manually changed or added for each deployment. A common way of addressing this is to create a separate configuration file for each different destination of the software, i.e. for each different application or operating environment. According to this scheme, when preparing code for a specific use, it is simply necessary to select the appropriate configuration file for the build process. Not all parameters changes between applications or operating environments so that each configuration file may therefore consist of a combination of parameters common to several environments or applications and some other parameters specific to only one. This imposes a significant overhead in keeping all the separate configuration files up to date.

In large software applications, a very large number of parameters will be required and these are often accommodated in more than one configuration file for each software component, each configuration file performing a different role. For example, code implementing a large web site could require in excess on 100 configuration files. Updating these files is a manual task and the effort required to configure these files for different destinations constitutes a heavy overhead on the software development process. Such a complex, manual process is also inevitably prone to error, in particular, the risk of changing a parameter in one configuration file while overlooking the same parameter in another is high. Such errors lead to code failures resulting from resources or links essential to the correct operation of the code not being found. Significant additional effort may then be required as a result of having to look for and identify the cause of the failure: leading to wasted effort and additional delays in the development process.

The present invention provides a method of preparing a configuration file for configuration of a software component for a second destination different from a default destination, in which the software component comprises code requiring a set of parameters to configure the code for each destination, the method including the steps of generating a default set of parameters, in which the parameters of the default set relate to the default destination and in which a subset of the parameters of the default set relate to both the default and the second destinations; generating a second set of parameters in which the parameters of the second set relate to the second destination but not to the default destination; combining the parameters of the default set with those of the second set to produce the configuration file by replacing in the default set each parameter that does not relate to the second destination with a corresponding parameter from the second set.

According to one aspect of the invention the second set of parameters comprises a first subset of parameters that relate to the second destination and a second subset of parameters that relate to a third destination different from the default and second destinations; in which each parameter of the second set is associated by means of a flag with the destination to which it relates; in which the combining step includes selecting on the basis of the parameter flags parameters from the second set that are associated with the desired destination. According to a further aspect of the invention the default set comprises a configuration file for the default destination. According to a further aspect of the invention each of the destinations is a different operating environment. According to a further aspect of the invention each of the destinations is a different application. According to a further aspect of the invention the subset of the parameters of the default set that relate to both the default and the second destinations is empty.

The present invention also provides an override file for supplying parameters for configuration of a software component for a second destination different from a default destination, in which the override file comprises a subset of the parameters required for the configuration, in which the subset is comprised of only those parameters which take a different value in the second destination and the default destination. According to one aspect of the invention the override file comprises a second subset of parameters for a third destination different from the default and second destinations; in which the second subset is comprised of only those parameters which take a different value in the third destination and the default destination; in which each parameter is associated by means of a flag with the destination to which it relates; in which the combining step includes selecting on the basis of the parameter flags parameters that are associated with the desired destination.

The invention also provides a method of preparing a software component for a plurality of destinations, in which the software component comprises code requiring a set of parameters to configure the code for a destination, the method including the steps of generating a default set of parameters, in which the parameters of the default set relate to a default destination; generating a second set of parameters in which the parameters of the second set relate to a second destination; combining the code with the parameters of the default set to produce a software component for the default destination; and combining the code with the parameters of the second set and a subset of the parameters of the default set to produce a software component for the second destination.

According to an aspect of the invention each parameter of the second set corresponds to a parameter of the default set; and in which any of the parameters of the default set without a corresponding parameter in the second set relate to both the default and second destinations. According to a further aspect of the invention, the method includes, in replacing a parameter, the steps of removing a parameter from the default set of parameters and replacing the parameter with a corresponding parameter from the second set of parameters to produce a new set of parameters comprising parameters from the default and second sets and combining the code with the parameters of the new set to produce a software component for the second destination.

The invention also provides a build script for preparing a software component for a plurality of destinations, in which the software component comprises code requiring a set of parameters to configure the code for an destination, In which the build script comprises: means for identifying a selected destination from a plurality of destinations; means for accessing a default parameter set and a second parameter set in which the parameters of the default set relate to a default destination and the parameters of the second set relate to a second destination; means for combining the code with the parameters of the default set to produce a software component for the default destination; and means for combining parameters of the second and default sets to produce a configuration file for the second destination; and means for combining the code with the parameters of the configuration file to produce a software component for the second destination.

According to an aspect of the invention parameters of a third set for a third destination are located in a file with the parameters of the second set, in which the build script comprises means for reading a flag attached to each parameter of the second and third sets to identify the related destination, and for selecting a parameter set from the file to combine with the code on the basis of the flags. According to a further aspect of the invention the build script comprises means for reading a code flag indicating the destination for the code and for selecting a parameter set to combine with the code on the basis of the code flag.

The invention also provides a system for providing a plurality of software components for different destinations, in which each software component comprises code requiring a set of parameters to configure the code for an destination comprising: a default parameter set and a second parameter set in which the parameters of the default set relate to a default destination and the parameters of the second set relate to a second destination; means for combining the code with the parameters of the default set to produce a software component for the default destination; and means for combining parameters of the second and default sets to produce a configuration file for the second destination; and means for combining the code with the parameters of the configuration file to produce a software component for the second destination.

According to an aspect of the invention the parameters of one of the second and default sets of parameters comprise specifiers for locations in the destination. According to a further aspect of the invention the system comprises means for reading a flag indicating one of the second and default destinations and for selecting one of the second and deafault sets of parameters depending on the value of the flag. According to a further aspect of the invention the code comprises placeholders for parameters and in which the system comprises means for mapping the parameters of one of the configuration file and the default set of parameters into the placeholders. According to a further aspect of the invention the means for combining is comprised in a configuration environment separate from the destinations.

Embodiments of the present invention will now be described by way of example with reference to the drawings in which:

Figure 1 shows in block diagram form typical development environments;

Figure 2 shows a schematic of a framework project;

Figure 3 shows a project hierarchy;

Figure 4 shows projects and dependencies;

Figure 5 shows templates;

Figures 6A, 6B and 6C show configurations of properties files according to the present invention.

Figure 2 show a Framework project. This project holds the main build scripts and templates to generate new sub projects. The Framework project is used by Build Managers to create working templates of component types for developers to use. By doing this, the structure and build process is already provided and gives a uniform development platform across all projects.

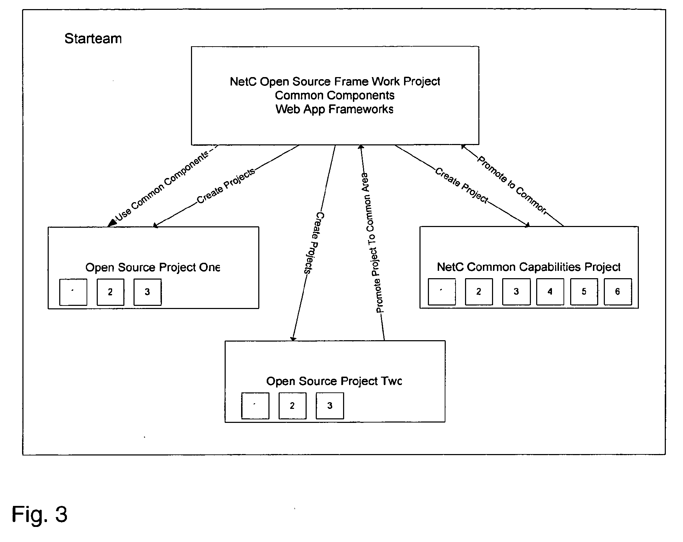

By separating projects into distinct deliverables, the need for parallel development is greatly reduced. Each project will follow its own Configuration Management cycle and have code independence of other projects. As shown in Figure 3, each sub project will use the main Framework project as its master template allowing each project to conform to a supported set of packages

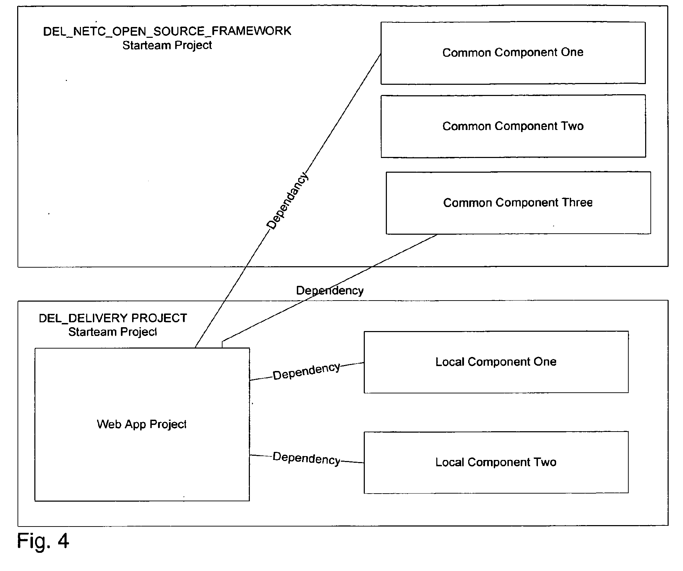

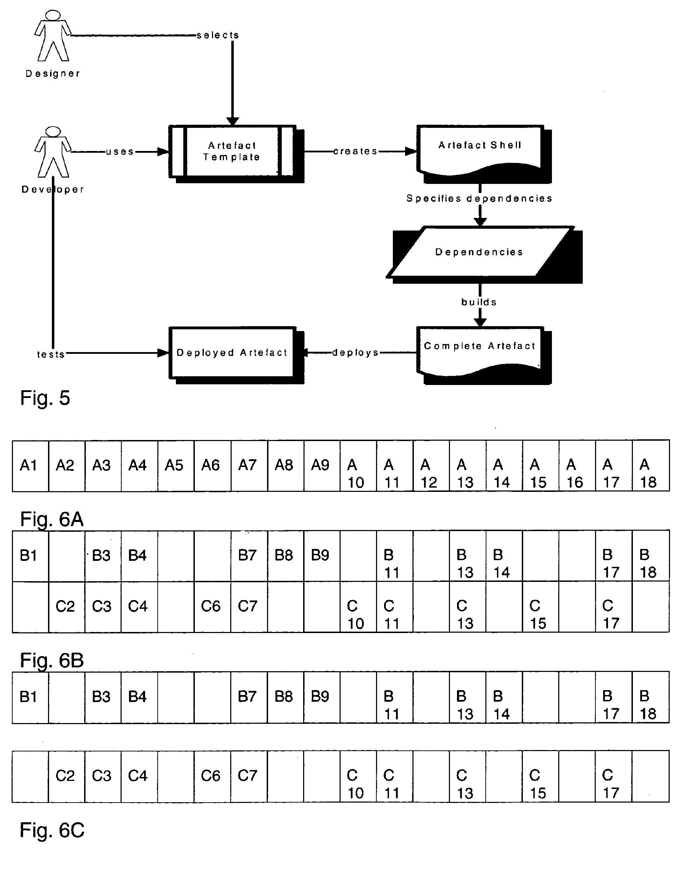

Within each project, the core building blocks are the components. As shown in Figure 4, projects can create their own components or reuse common capabilities from the main Project. The main Project defines the core Packages available. Sub projects use only approved packages to reduce the chances of package clashes in deployment. Projects use the packages to develop and create their own component functionality. Selection of templates is shown in Figure 5.

An application will be created using a framework project and one or more component projects. The project uses the framework to automate the build and for deployment of the required level of each underlying component required for an application. Each component has its own code base, build scripts and label defined in the framework build scripts. This provides an additional layer of labelling over and above the conventional version control systems.

A build script is a file which is used to drive the build process. The framework project provides a common set of build scripts that are used directly by the components to manage, develop and deploy all aspects of the application build. The core framework scripts for a project do not normally need to change and provide a working build process for code development and deployment.

The build scripts are run using a configuration flag to identify the destination to which the code will be deployed. The flag is used as a switch parameter to allow the build scripts to automate the configuration and deployment of the software components. Using the switch, the build scripts can automatically alter the configuration parameters of the application to build for the desired deployment destination. The switch flags are predetermined and built into the core scripts on the basis of one per destination. In this case, the build scripts use the switch flag in the following manner.

For example: for deployment to an IVVT destination, a flag of "IVVT' is sent to the build command. The scripts then use this flag to determine from the configuration files the appropriate parameters to be used in the build. Thus, the application is automatically configured for the target destination. If no override parameter exists, the default parameter is used. This automation prevents the human error in manually uploading the appropriate configuration parameters for each destination, in particular, the burden of replicating parameter updates across a range of files is lifted. The build scripts then automate the deployment of the application to the destination as described in copending patent application EP 05257662 in the name of British Telecommunications public limited company.

According to the present invention, a default configuration file is provided that contains default component parameters. The default configuration file will normally relate to one of the destinations to be supported (the default destination) which may, for example be a development environment. The default component parameters will typically include properties and definitions of paths to local file systems, i.e. local to the default environment and may contain application-specific parameters such as language parameters. The default configuration file for each project is advantageously supplemented according to the invention by one or more supplementary local configuration files. These supplementary local configuration files are required in order to allow the framework to have the flexibility to support the automatic setup of the software build for different destinations (i.e. different computing destinations). Several different destinations can be supported by use of the local configuration files. In use, the build process can use the appropriate local configuration file to override some or all of the settings held in the default configuration file.

The framework provides a built-in mechanism for deploying and promoting projects from one destination to the next without the need for manually adding or removing configuration files. This greatly assists in changing properties when moving from a development environment to say a test, reference or live environment. A typical code configuration operation will be run based on build scripts. The properties are set in a separate override file and the build scripts deploy the required values depending upon which destination is to be deployed to.

According to a preferred embodiment of the invention, the build scripts are run using a flag to identify the destination in which the software component is intended to operate. When the scripts are run, the flag is used to determine the correct configuration file or files to use. The flag is set by the user prior to initiating the build process.

For example, a software configuration command line prompt would be
*Build workstation build* (for configuring the code for the development workstation environment); or
*Build test build* (for configuring the code for the test environment); or
*Build live build* (for configuring the code for the live platform);
depending on which environment (development, test or live) is desired.

The properties are held in a default configuration file and an override configuration file which the build scripts pick up:

    <file>.properties
    and
    <file>.properties.override.

The default configuration file holds default values to configure the component i.e., <file>.properties might hold values such as an email IP address and username/password combination. For example, the default file could hold:

email.server = 132.146.77.100

where 132.146.77.100 is the internet address of an email server in the development environment. The override file holds values for the specific destinations i.e. <file>.properties.override could hold:

Workstation.email.server = 132.146.77.101

Test.email.server = 132.146.77.102

Live.email.server = 132.146.77.103

Preferably, each parameter in the override file has a flag to determine the destination to which it relates. When the build scripts run, they load the default configuration file and the appropriate override file, if available, and then replace those default parameters in the default configuration file that have a corresponding override value in the appropriate override configuration file. Preferably, the flags associated with each parameter in the override file are used to select which parameters to use in updating the default file. This results in the automatic generation of the appropriate set of properties for the target deployment destination resulting in properly configured code for that destination. In the above example, if we run script *"build workstation build",* some or all of the default properties values are replaced with the corresponding values from the override properties file creating an updated local configuration file configured for the target destination. Following the above example, the updated configuration file could read:

Email.server=132.146.77.101

This differs from a conventional configuration file that is configured to supply the full set of parameters for one destination. The build scripts need to know the location of the paths to the build files so the build scripts can run. In this application the configuration files are actually parameters for use in configuration of the software being developed. The paths to the workstation may be
D:\starteam\framework
In test it would be
\apps\starteam\framework
The build scripts do not process these automatically and they need to be set by the user for the scripts to run, i.e. as part of the initial configuration. These are effectively the paths to find the build script locations on the desired development machine.

The default configuration file for a specific application holds default values to configure the component i.e., <file>.properties might hold values such as language, local dialling code, contact address. For example, the default file could hold:

language = English

. The override file holds values for the specific destinations i.e. <file>.properties.override could hold:

language = Filipino

language = Finnish

language = French

The invention applies to both types of destination identified above, i.e. to different applications and different operating environments.

Figure 6 shows a schematic representation of configuration files according to an embodiment of the present invention. In Figure 6A, a default configuration file contains one set of parameters A1 to A18 inclusive for the default destination. In the schematics of Figure 6, files are shown arranged as a table although this is not meant to represent the actual form of the files which could be arranged in various fashions according to accepted software practice. In Figure 6B, an override configuration file is shown, containing two partial sets of parameters, although fewer or more sets could be provided in a single configuration file according to the invention. These sets are partial in that each set only contains those parameters that are required by the target destination and for which the corresponding parameter of the default "A" set is not suitable. A first partial set (B1, B3, B4, B7, B8, B9, B11, B13, B14, B17, B18) provides parameters for a second destination. The parameters B of the first partial set correspond to some, but not all, of the default parameters A. A second partial set (C2, C3, C4, C6, C7, C10, C11, C13, C15, C17) provides parameters for a third destination. The parameters C of the second partial set correspond to some, but not all, of the default parameters A and some, but not all, of the parameters B of the first partial set.

In Figure 6C, two separate override configuration files are shown, each override configuration file containing one partial set of parameters according to the invention. similar to the arrangemtnof Figure 6B, the first partial set (B1, B3, B4, B7, B8, B9, B11, B13, B14, B17, B18) provides parameters for a second destination. The parameters B of the first partial set correspond to some, but not all, of the default parameters A. the second partial set (C2, C3, C4, C6, C7, C10, C11, C13, C15, C17) provides parameters for a third destination. The parameters C of the second partial set correspond to some, but not all, of the default parameters A and some, but not all, of the parameters B of the first partial set.

In more detail, in the arrangements of both Figures 6B and 6C, B parameters of the first partial set correspond to and therefore will replace for the second destination, the like-numbered default parameters, i.e. those A parameters numbered 1, 3, 4, 7, 8, 9, 11, 13, 14, 17 and 18. Similarly, C parameters of the second partial set correspond to and therefore will replace for the third destination, the like-numbered default parameters, i.e. those A parameters numbered 2, 3, 4, 6, 7, 10, 11, 13, 15 and 17.

The invention advantageously improves the software build process by introducing automated selection of which file is loaded and which parameters are required according to the target destination and thus reduces the burden in keeping multiple files up to date while minimising the effect of human error inherent in manually changing such files.

Alternative embodiments may employ a number of configuration files - e.g. one per destination or one per aspect (email, database, etc).

In addition to facilitating code builds for the different stages of development, the invention relates to configuring code to work in different live environments, i.e. porting software from one target system to a different target system.

As will be understood by those skilled in the art, the invention may be implemented in software, any or all of which may be contained on various transmission and/or storage mediums such as a floppy disc, CD-ROM, or magnetic tape so that the program can be loaded onto one or more general purpose computers or could be downloaded over a computer network using a suitable transmission medium. The computer program product used to implement the invention may be embodied on any suitable carrier readable by a suitable computer input device, such as CD-ROM, optically readable marks, magnetic media, punched card or tape, or on an electromagnetic or optical signal.

**Claims**

1. A method of preparing a configuration file for configuration of a software component for a second destination different from a default destination, in which the software component comprises code requiring a set of parameters to configure the code for each destination,
   the method including the steps of
   generating a default set of parameters, in which the parameters of the default set relate to the default destination and in which a subset of the parameters of the default set relate to both the default and the second destinations;
   generating a second set of parameters in which the parameters of the second set relate to the second destination but not to the default destination;
   combining the parameters of the default set with those of the second set to produce the configuration file by replacing in the default set each parameter that does not relate to the second destination with a corresponding parameter from the second set.

2. A method as claimed in claim 1 in which the second set of parameters comprises a first subset of parameters that relate to the second destination and a second subset of parameters that relate to a third destination different from the default and second destinations; in which each parameter of the second set is associated by means of a flag with the destination to which it relates; in which the combining step includes selecting on the basis of the parameter flags parameters from the second set that are associated with the desired destination.

3. A method as claimed in any of claims 1 and 2 in which the default set comprises a configuration file for the default destination.

4. A method as claimed in any of claims 1 to 3 in which each of the destinations is a different operating environment.

5. A method as claimed in any of claims 1 to 4 in which each of the destinations is a different application.

6. A method as claimed in any of claims 1 to 5 in which the subset of the parameters of the default set that relate to both the default and the second destinations is empty.

7. An override file for supplying parameters for configuration of a software component for a second destination different from a default destination, in which the override file comprises a subset of the parameters required for the configuration, in which the subset is comprised of only those parameters which take a different value in the second destination and the default destination.

8. An override file as claimed in claim 7 also comprising a second subset of parameters for a third destination different from the default and second destinations; in which the second subset is comprised of only those parameters which take a different value in the third destination and the default destination; in which each parameter is associated by means of a flag with the destination to which it relates; in which the combining step includes selecting on the basis of the parameter flags parameters that are associated with the desired destination.

9. An override file as claimed in any of claims 7 or 8 in which each of the destinations is a different operating environment.

10. An override file as claimed in any of claims 7 or 9 in which each of the destinations is a different application.

11. A method of preparing a software component for a plurality of destinations, in which the software component comprises code requiring a set of parameters to configure the code for a destination,
    the method including the steps of
    generating a default set of parameters, in which the parameters of the default set relate to a default destination;
    generating a second set of parameters in which the parameters of the second set relate to a second destination;
    combining the code with the parameters of the default set to produce a software component for the default destination;
    and

combining the code with the parameters of the second set and a subset of the parameters of the default set to produce a software component for the second destination.

12. A method as claimed in claim 11 in which each parameter of the second set corresponds to a parameter of the default set; and in which any of the parameters of the default set without a corresponding parameter in the second set relate to both the default and second destinations.

13. A method as claimed in any of claims 11 and 12 including, in replacing a parameter, the steps of removing a parameter from the default set of parameters and replacing the parameter with a corresponding parameter from the second set of parameters to produce a new set of parameters comprising parameters from the default and second sets and combining the code with the parameters of the new set to produce a software component for the second destination.

14. A method as claimed in any of claims 11 to 13 including reading a set of parameters at run time to configure the software component so it can run in the desired environment.

15. A method as claimed in any of claims 11 to 14 including the steps of generating a third set of parameters for a third destination attaching a flag to each parameter of the second and third sets to identify the related destination, in which the combining step includes reading the parameter flags and selecting a parameter set from the file to combine with the code on the basis of the flags.

16. A method as claimed in claim 15 in which the parameters of the second set and the third set are located in a single file.

17. A method as claimed in claim 15 in which the parameters of the second set and the third set are located in separate files.

18. A method as claimed in any of claims 11 to 17 including the step of attaching a flag to the code to identify the desired destination, in which the combining step includes reading the code flag and selecting a parameter set from the file to combine with the code on the basis of the flag.

19. A method as claimed in any of claims 11 to 18 which the default set of parameters comprises a default file and the second set of parameters comprises a second file.

20. A method as claimed in any of claims 11 to 19 in which each of the destinations is a different operating environment.

21. A method as claimed in any of claims 11 to 19 in which each of the destinations is a different application.

22. A build script for preparing a software component for a plurality of destinations, in which the software component comprises code requiring a set of parameters to configure the code for an destination,
In which the build script comprises:

> means for identifying a selected destination from a plurality of destinations;
> means for accessing a default parameter set and a second parameter set in which the parameters of the default set relate to a default destination and
> the parameters of the second set relate to a second destination; means for combining the code with the parameters of the default set to produce a software component for the default destination; and
> means for combining parameters of the second and default sets to produce a configuration file for the second destination; and means for combining the code with the parameters of the configuration file to produce a software component for the second destination.

23. A build script as claimed in claim 22 in which each parameter of the second set corresponds to a parameter of the default set; and in which any of the parameters of the default set without a corresponding parameter in the second set relate to both the default and second destinations.

24. A build script as claimed in any of claims 22 and 23 comprising means for producing the configuration file for the second destination by removing one or more parameter from the default set of parameters and replacing each removed parameter with a corresponding parameter from the second set of parameters.

**25.** A build script as claimed in any of claims 22 to 24 comprising means for reading a set of parameters at run time to configure the software component so it can run in the desired environment.

**26.** A build script as claimed in any of claims 22 to 25 in which parameters of a third set for a third destination are located in a file with the parameters of the second set, in which the build script comprises means for reading a flag attached to each parameter of the second and third sets to identify the related destination, and for selecting a parameter set from the file to combine with the code on the basis of the flags.

**27.** A build script as claimed in any of claims 22 to 26 comprising means for reading a code flag indicating the destination for the code and for selecting a parameter set to combine with the code on the basis of the code flag.

**28.** A system for providing a plurality of software components for different destinations, in which each software component comprises code requiring a set of parameters to configure the code for an destination comprising:

a default parameter set and a second parameter set in which the parameters of the default set relate to a default destination and the parameters of the second set relate to a second destination;
means for combining the code with the parameters of the default set to produce a software component for the default destination; and
means for combining parameters of the second and default sets to produce a configuration file for the second destination; and
means for combining the code with the parameters of the configuration file to produce a software component for the second destination.

**29.** A system, as claimed in claim 28 in which the parameters of one of the second and default sets of parameters comprise specifiers for locations in the destination.

**30.** A system as claimed in any of claims 28 to 29 comprising means for reading a flag indicating one of the second and default destinations and for selecting one of the second and deafault sets of parameters depending on the value of the flag.

**31.** A system as claimed in any of claims 28 to 30 in which the code comprises placeholders for parameters and in which the system comprises means for mapping the parameters of one of the configuration file and the default set of parameters into the placeholders.

**32.** A system as claimed in any of claims 28 to 31 in which the means for combining is comprised in a configuration environment separate from the destinations.

**33.** A carrier medium carrying a computer program or set of computer programs adapted to carry out, when said program or programs is run on a data-processing system, each of the steps of the method of claims 1 to 5 , 11 to 21 or to provide the script of claims 22 to 27 or the system of claims 28 to 32.

Integration Environment → Test Environment → IVV&T Environment → Live Environment

# Fig. 1

Starteam

NetC Open Source Frame Work Project
Common Components
Web App/Component Frameworks

Creates Web App

Creates Component

Creates Component

New Project Area

2     3

# Fig. 2

Fig. 3

DEL_NETC_OPEN_SOURCE_FRAMEWORK
Starteam Project

Common Component One

Common Component Two

Common Component Three

Dependency

Dependency

DEL_DELIVERY PROJECT
Starteam Project

Web App Project

Dependency

Local Component One

Dependency

Local Component Two

Fig. 4

Designer — selects

Developer — uses → Artefact Template — creates → Artefact Shell

Specifies dependencies

Dependencies

builds

tests → Deployed Artefact ← deploys — Complete Artefact

Fig. 5

| A1 | A2 | A3 | A4 | A5 | A6 | A7 | A8 | A9 | A 10 | A 11 | A 12 | A 13 | A 14 | A 15 | A 16 | A 17 | A 18 |
|----|----|----|----|----|----|----|----|----|------|------|------|------|------|------|------|------|------|

Fig. 6A

| B1 | | B3 | B4 | | | B7 | B8 | B9 | | B 11 | | B 13 | B 14 | | | B 17 | B 18 |
|----|----|----|----|----|----|----|----|----|----|------|----|------|------|----|----|------|------|
| | C2 | C3 | C4 | | C6 | C7 | | | C 10 | C 11 | | C 13 | | C 15 | | C 17 | |

Fig. 6B

| B1 | | B3 | B4 | | | B7 | B8 | B9 | | B 11 | | B 13 | B 14 | | | B 17 | B 18 |
|----|----|----|----|----|----|----|----|----|----|------|----|------|------|----|----|------|------|

| | C2 | C3 | C4 | | C6 | C7 | | | C 10 | C 11 | | C 13 | | C 15 | | C 17 | |
|----|----|----|----|----|----|----|----|----|------|------|----|------|----|------|----|------|----|

Fig. 6C

**European Patent Office**

**EUROPEAN SEARCH REPORT**

Application Number

EP 06 25 3467

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 832 505 A (KASSO CHRIS S [US] ET AL) 3 November 1998 (1998-11-03) * abstract * * column 1, line 25 - line 54 * * column 2, line 55 - column 3, line 22 * * column 6, line 20 - line 30 * * column 6, line 44 - column 7, line 2 * * column 7, line 9 - column 9, line 35 * * figures 3,4A,4B * | 1-33 | INV. G06F9/445 |
| X | HILTUNEN M A: "Configuration management for highly customisable software" IEE PROCEEDINGS: SOFTWARE, IEE, STEVENAGE, GB, vol. 145, no. 5, 26 October 1998 (1998-10-26), pages 180-188, XP006011476 ISSN: 1462-5970 * abstract * * page 180, left-hand column, line 5 - last line * * page 180, right-hand column, paragraph 2 * | 1-33 | |
| X | US 5 740 431 A (RAIL PETER D [US]) 14 April 1998 (1998-04-14) * abstract * * column 1, line 19 - line 28 * * column 1, line 34 - line 47 * * column 1, line 66 - column 2, line 8 * * column 3, line 11 - line 65 * * column 4, line 36 - line 40 * * column 5, line 21 - line 55 * | 1-33 | TECHNICAL FIELDS SEARCHED (IPC) G06F |

The present search report has been drawn up for all claims

| Place of search | Date of completion of the search | Examiner |
|---|---|---|
| Munich | 11 January 2007 | Skomorowski, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 3467

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2007

| Patent document cited in search report | | Publication date | Patent family member(s) | Publication date |
|---|---|---|---|---|
| US 5832505 | A | 03-11-1998 | NONE | |
| US 5740431 | A | 14-04-1998 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 05257662 A